# EUROPEAN PATENT APPLICATION

(11) **EP 2 228 568 A1**
(43) Date of publication of application: **15.09.2010**
(21) Application number: 10156050.6
(22) Date of filing: 10.03.2010
(51) Int. Cl.: F16H 63/18

(54) **A method of modifying a vehicle gearbox, and a gearbox obtained with such a modification**

(30) Priority: 10.03.2009 IT BO20090143
(71) Applicant: C.I.M.A. - Costruzioni Italiane Macchine Attrezzi S.p.A., 40050 Villanova di Castenaso (IT)
(72) Inventor: Corsellini, Maurizio, 40010, PADULLE DI SALA BOLOGNESE (IT)
(74) Representative: Lanzoni, Luciano

(57) **Abstract**

A method of modifying a vehicle gearbox includes the steps of preparing an existing gearbox (1) of the type operated by a shift lever and H-gate, substituting the existing primary and secondary shafts of the gearbox with a replacement primary shaft (3) and a replacement secondary shaft (4), substituting the existing selector rods and forks with replacement rods and forks (9, 10, 11, 12, 13, 14) allowing the selection of different speed ratios between the replacement primary shaft (3) and the replacement secondary shaft (4), preparing an actuator (19) by which the replacement selector rods and forks (9, 10, 11, 12, 13, 14) are operated sequentially, and mounting the actuator (19) to the outside of the gearbox. The sequential actuator (19) is attached directly to the housing (2), bolted to an external mounting surface occupied previously by the shift lever and H-gate assembly.

## Description

The present invention relates to a method for the modification of a vehicle gearbox, and in particular, the gearbox of a road vehicle.

More exactly, the invention relates to the modification of an existing gearbox with the end in view of obtaining a high performance gearbox, suitable in particular for installation in a racing vehicle.

The present invention relates also to a gearbox obtainable by implementing the method disclosed.

Conventionally, vehicles raced in certain types of motorsport competition are effectively modified road vehicles; in particular, the chassis and many other parts of the original road vehicle remain substantially unchanged, whilst other components (one of which being the gearbox) are suitably modified in order to achieve higher levels of performance.

In short, certain competition vehicles are built by modifying standard production road vehicles.

The requirements that need to be met by gearboxes for road vehicles include low noise levels, smooth gear shifts and a high degree of reliability (ideally, the lifetime of the gearbox should be equal at least to the useful life of the vehicle). Accordingly, gearboxes for road vehicles are equipped with helical gears for smoother meshing contact and easier engagement, and with gear shift actuators using a so-called H-pattern selection system.

Terms such as 'H-pattern' and 'H-gate' describe a component (long familiar in the automotive field) to which a shift lever is mounted in such a way that it can assume different positions determined by a plate appearing substantially as a letter 'H'; this allows the gears to be selected (movement of the lever side to side), and engaged or disengaged (movement of the lever forward and back).

Equally, there are gear shift actuators by means of which these same engagement and selection movements are induced electromechanically or using servo mechanisms, operated for example by push buttons or levers mounted to the steering wheel of the vehicle. These types of actuators fall likewise within the definition of H-pattern selection.

In addition, synchromesh devices are utilized almost universally to produce a more uniform and smoother engagement of the gears.

In greater detail, the gearbox of a road vehicle comprises a housing and, mounted internally of the housing, a primary shaft connected to the engine and a secondary shaft connected by way of a differential to the road wheels. The primary shaft and secondary shaft each carry a plurality of gears, certain of which keyed to the respective shaft on which they are mounted, the others freely revolving. Each of the gears on one shaft turns in constant mesh with a respective gear on the other shaft. The gears are selected through the agency of collars mounted slidably on the primary shaft and on the secondary shaft by way of interlocking splines. When a single collar positively engages one of the freely revolving gears, this same gear is caused to rotate as one with the shaft on which it is mounted. As a result, the primary shaft is able to drive the secondary shaft in rotation, with the size of the selected gear determining the transmission ratio between the shafts. Each successive selection of a freely revolving gear, which must be locked in rotation with the relative shaft to establish a respective gear ratio or speed, is accomplished by selectively shifting one of the sliding collars aforementioned. The single freely revolving gears are engaged through the agency of selector forks, each one of which mounted slidably on a respective rod and coupled to a relative sliding collar. The fork is operated by means of the shift lever, which in turn is operated manually by the driver of the vehicle.

The gearbox of a road vehicle thus contains the primary shaft and the secondary shaft, and generally three selector rods carrying respective forks (each fork can shift one corresponding collar in such a way as to select either one of two gears, so that three forks can be used to select five forward gears plus one reverse gear). Generally speaking, the sliding collars are divided between the primary and secondary shafts (for example, one collar on the primary shaft and two on the secondary shaft).

The shift lever is associated with an H-gate, in other words a traditional shift gate by means of which the driver selects the gears moving the lever in a pattern suggestive of a letter 'H'.

By contrast, in the case of performance-oriented applications (competition vehicles) there is a completely different set of requirements for the gearbox: in effect, the time taken to change gear must be reduced to a minimum, and the engaging action therefore needs to be as fast as possible. Moreover, the forces in play are much greater, and there are no longer any limitations on vibration and noise levels. With these factors in mind, the gearboxes fitted to competition vehicles are equipped with spur gears, typically noisier but capable of transmitting higher mechanical loads. In addition, synchromesh components are eliminated, and the dog coupling between collar and gear is direct. Consequently, the gear shift is noticeably coarse but also very quick, with the result that a gearbox built in this way delivers high performance.

The prior art embraces the practice of modifying production gearboxes designed for road vehicles, with H-pattern selection, by applying a sequential type selector capable of producing a faster gear shift.

Conventional methods of modifying a gearbox for performance purposes involve replacing the primary shaft and the secondary shaft, removing the selector forks and the respective rods, and installing a single selector rod and fork assembly in the housing. Also, a further component is installed inside the housing, namely a drum or barrel having peripheral grooves, each designed to induce an axial translational movement in a corresponding selector fork when the barrel assumes a given angular position. Thus, the grooves on the barrel interact with the forks as cam profiles, converting the rotary movement of the barrel into linear movement of the forks.

Operationally, the modification in question involves removing the gearbox from the vehicle, removing the cover from the gearbox, then removing the primary shaft, the secondary shaft, the selector rods and the forks from the housing.

Thereafter, the new primary and secondary shafts with spur gears are fitted, together with the barrel, and the new rod and fork assembly. Finally, the housing is closed up and the assembled unit can be refitted to the vehicle.

It has been found that the method of implementing the modification as described above necessarily involves lengthy and complex machining operations, and is somewhat costly.

To perform the modification, in effect, the complex machining operations in question are required in order to adapt the housing so that it can receive the barrel. More exactly, the standard housing is designed to accommodate a given number of rods (usually three) carrying a similar number of forks, and it would not be possible to install the barrel in the space occupied formerly by the selector rods without certain essential modifications being made. In reality, the dimensions of the barrel are much greater than those of a selector rod, and further space is also required for the connection of an actuator to set the barrel in rotation.

It is therefore indispensable that special machining operations are carried out in order to create a space within the housing, such as will accommodate the barrel and allow the connection of the barrel to a respective actuator.

These machining operations considerably prolong the time required to complete the modification, and as the housing must be sent to a specialist workshop, there are also logistical difficulties connected both with the handling of the component, and with the extended storage of the vehicle undergoing the modification.

Moreover, the machining operations in question call for extreme precision and are notably complex. Also, the operations are carried out on the basis of drawings (which differ from vehicle to vehicle), and therefore not standardized. Consequently, the cost of the machining work is appreciably high, and impacts negatively on the overall cost of the modification.

Accordingly, the object of the present invention is to provide a method of modifying a vehicle gearbox in which the above noted drawbacks associated with the prior art are overcome.

One object of the present invention, in particular, is to provide a method of modifying a vehicle gearbox that features a low cost of implementation.

A further object of the present invention is to provide a method of modifying a vehicle gearbox wherein the steps required to complete the modification are reduced to a minimum, and the need for additional machining operations, in particular, is eliminated altogether.

The stated objects are substantially realized in a method according to the present invention for modifying a vehicle gearbox, of which the essential features are as recited in claim 1 and/or in any one or more of the claims dependent on claim 1.

The stated objects are realized similarly in a vehicle gearbox obtainable by implementation of the method according to the present invention, of which the essential features are as recited in claim 7 and/or in any one or more of the claims dependent on claim 7.

The stated objects are realized furthermore in a kit for implementing the method according to the present invention, of which the essential features are as recited in claim 19 and/or in any one or more of the claims dependent on claim 19.

The invention will now be described in detail, by way of example, with the aid of the accompanying drawings, in which:
- figure 1 is a perspective view of a vehicle gearbox converted by the method according to the present invention;
- figure 2 is a perspective view showing the gearbox of figure 1, with certain parts omitted better to reveal others;
- figure 3 is a perspective view showing the gearbox of figure 2, with further parts omitted better to reveal others;
- figure 4 is a perspective view showing the gearbox of figure 2 with further parts omitted better to reveal others, and illustrated from a different angle;
- figure 5 is a sectional view on a plane passing through the axes of the primary and secondary shafts of the gearbox in figure 1, in which certain parts are omitted better to reveal others;
- figure 6 is a perspective view showing a component of the gearbox in figure 1;
- figure 7 is a perspective view showing the component of figure 6, with certain parts omitted better to reveal others;
- figure 8 is a front elevation view showing the component of figure 6, with certain parts omitted better to reveal others;
- figure 9 is a perspective view showing the component of figure 7, with certain parts omitted better to reveal others;
- figure 10 is a diagrammatic illustration showing the lateral surface of the component in figure 9, developed on a flat plane.

With reference to the accompanying drawings, numeral 1 denotes a gearbox, in its entirety, according to the present invention.

The gearbox 1 comprises a housing 2 (simplified in the drawings, but in any event presenting such parts as are necessary to a description of the invention) delimiting a given internal volume.

To advantage, the gearbox 1 according to the present invention utilizes an existing housing, and more specifically, a housing fitted originally with a manual gear shift control mechanism comprising a lever and an H-gate. This type of mechanism (shift lever and H-gate) is not illustrated in the drawings, being universally familiar to persons skilled in the art.

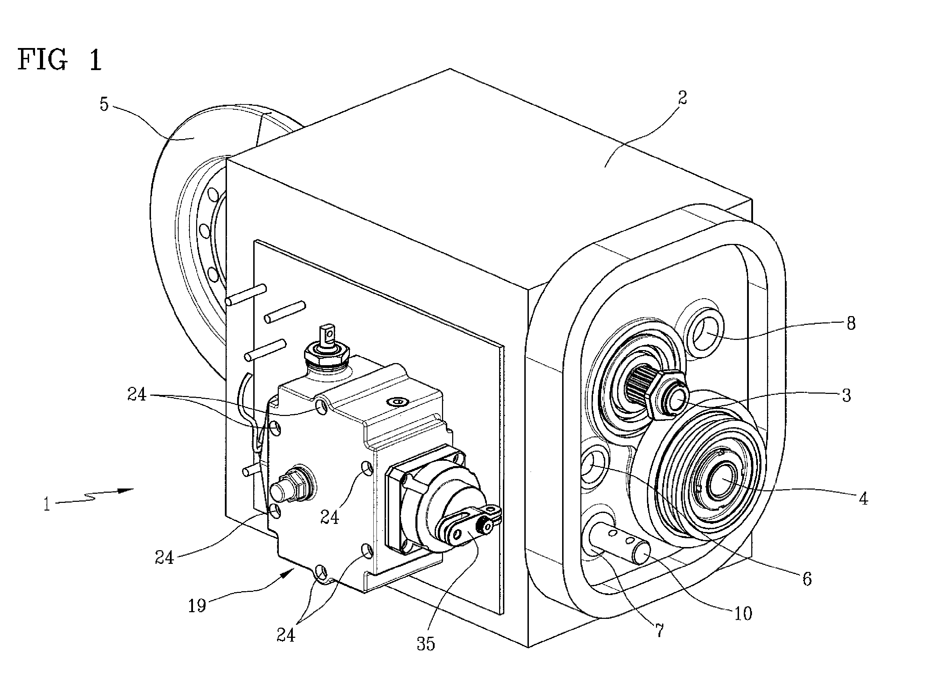

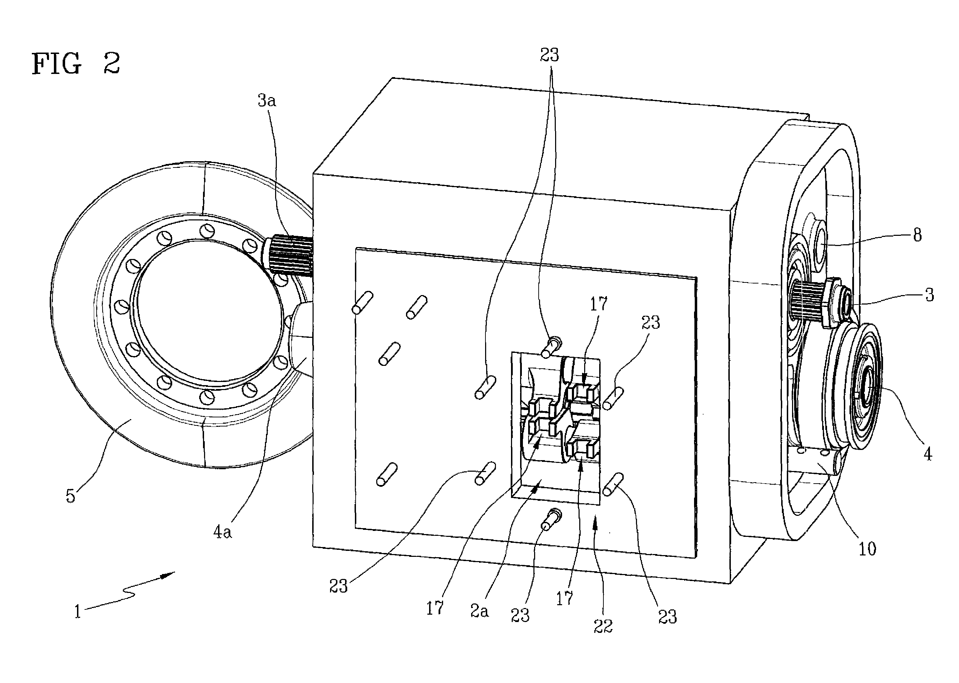

Located inside the housing 2, and within the envelope of the internal volume, in particular, are a primary shaft 3 and a secondary shaft 4. The two shafts 3 and 4 project in part from the envelope (figures 1 and 2), emerging at one end to support the reverse gears (see figure 1, in which the reverse train itself is omitted better to illustrate the end part of the housing 2) and emerging at the other end to connect with the power source (figure 2). In particular, power is transmitted through the gearbox from one end 3a of the primary shaft 3, coupled to and driven by the engine of the vehicle, to one end 4a of the secondary shaft 4, coupled in turn by way of a bevel gear pair to the crown wheel 5 of a mechanical differential unit from which power is delivered to the wheels of the vehicle.

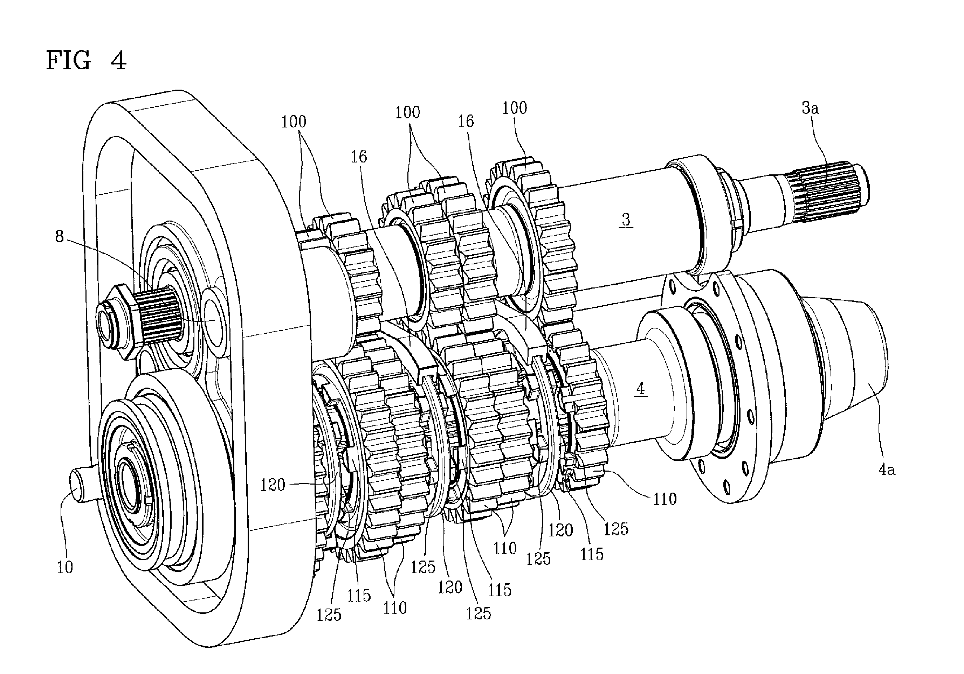

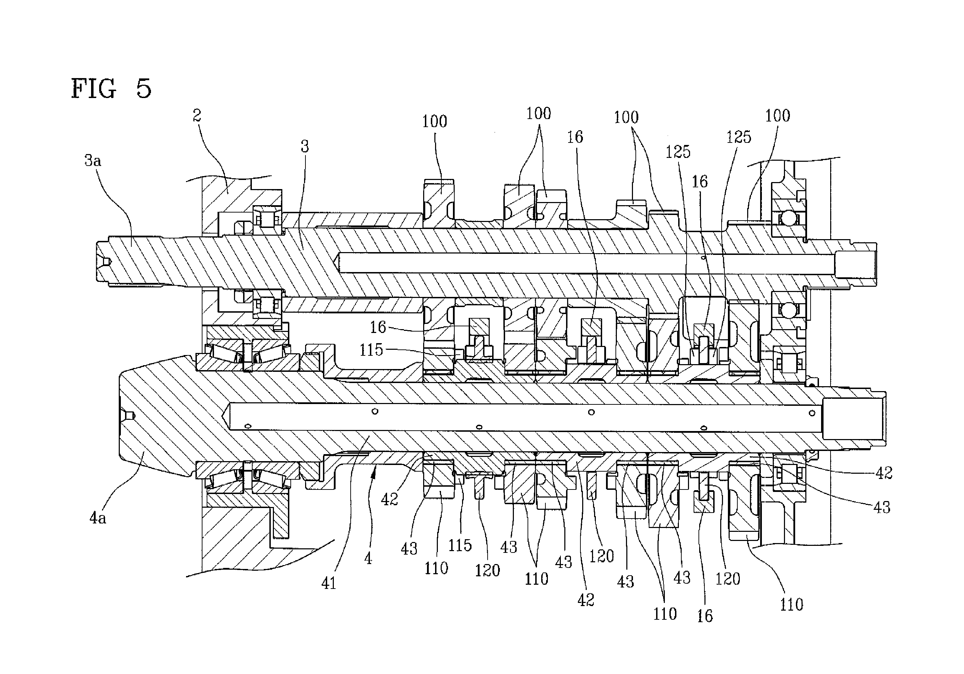

The primary shaft 3 and the secondary shaft 4 carry respective pluralities of gears 100 and 110 (or more generally, pluralities of tooth profiles) in mesh one with another. As illustrated to advantage in figures 4 and 5, the gears 100 of the primary shaft 3 are fixed, rotating as one with the selfsame shaft 3, whilst the gears 110 of the secondary shaft 4 are freely revolving relative to the remainder of this same shaft 4. The gears 110 of the secondary shaft 4 can be locked rotationally to the secondary shaft 4 through the agency of respective sliding collars 120 mounted between two consecutive gears 110 by way of interlocking splines in such a way as to rotate as one with the shaft 4.

Certain of the gears 100 on the primary shaft 3 can be embodied integrally with the shaft 3, in particular by creating portions of enlarged diameter and cutting tooth profiles directly into the surface.

The gears 100 and 110 are spur type gears, with straight cut teeth, suitable in particular for racing applications demanding superior performance.

Moreover, as discernible in figure 4, the coupling between the sliding collars 120 and the gears 110 of the secondary shaft 4 is frontal and direct, brought about by the positive engagement of dogs 125 presented by each sliding collar 120 with corresponding dogs 115 presented by the gears 110.The coupling between the sliding collars 120 and the gears 110 of the secondary shaft 4 is produced without the aid of synchromesh devices, to give a smarter and more immediate response during engagement. Since the housing 2 of the gearbox is intended for a road vehicle, and designed thus to contain sets of gears selected with a shift lever and H-gate, the two ends of the housing 2 present three seats 6, 7 and 8 accommodating a similar number of selector rods. More exactly, in the gearbox of a road vehicle, each of the seats 6, 7 and 8 accommodates a respective rod, so that there will be three independent rods, one of which carries a selector fork operating on the primary shaft, whilst the other two carry selector forks operating on the secondary shaft. In this configuration, the shift lever engages selectively by way of the H-gate with one or other of the three rods, in such a way as to operate one fork at a time (each fork is fastened permanently to the corresponding rod).

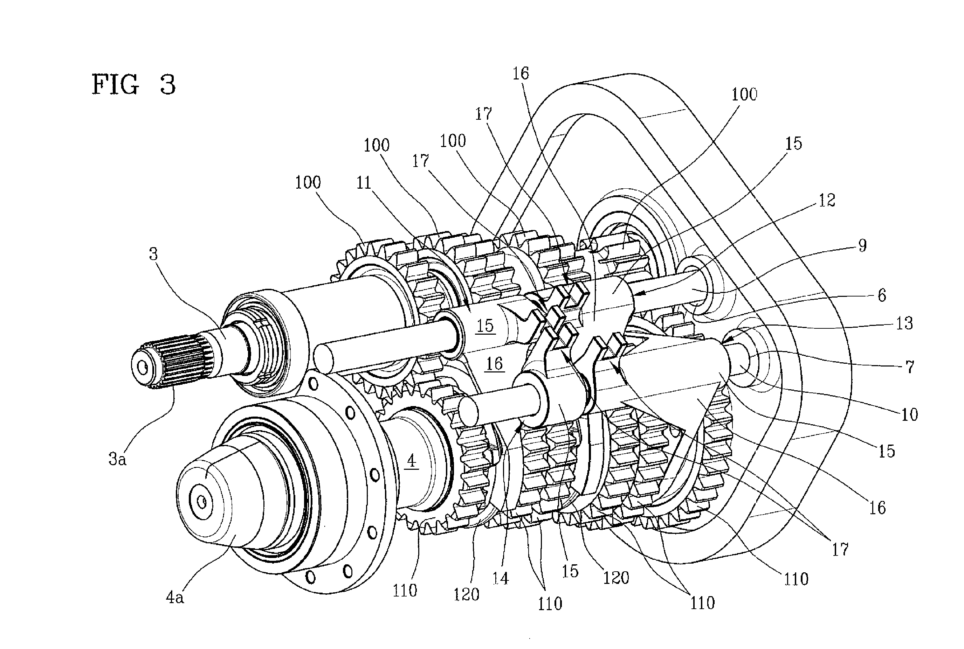

In accordance with the present invention, and as discernible in figure 3, only two of the seats 6 and 7 are occupied by respective selector rods 9 and 10. Of these two rods, a first rod 9 carries a first fork

11 and a second fork 12, mounted slidably and capable of movement on the rods in a direction parallel to the axes of rotation of the primary and secondary shafts 3 and 4 (the axes of rotation of the two shafts 3 and 4 are mutually parallel, and parallel to the directions in which the rods 9 and 10 extend through the housing).

The second rod 10 carries a slidably mounted third fork 13 and is also rigidly associated with a shifter element 14. The second rod 10 is also mounted slidably in the relative seats of the housing 2 and thus rendered capable of axial movement in a direction parallel to the axes of rotation of the primary and secondary shafts 3 and 4.

In greater detail, each selector fork 11, 12 and 13 comprises a hollow portion 15 ensheathing the relative rod 9 and 10, and a pincer portion 16 connected rigidly to the hollow portion 15. The pincer portion 16 acts directly on a respective sliding collar 120 in such a way as to induce translational movement, so that when the fork 11, 12 or 13 is shifted along the respective rod 9 or 10, the associated sliding collar 120 will engage with or disengage from a respective gear 110.

With reference to the shifter element 14, this also presents a hollow portion 20 which, unlike that of the forks 11, 12 and 13, is fixed permanently to the second rod 10. Accordingly, a translational movement of the shifter element 14 induces a corresponding movement of the entire second rod 10 and consequently of a fourth fork (not illustrated), mounted to the end of the selfsame rod 10 visible in figure 1. This fourth fork is the fork that selects reverse gear, and to this end, the seat denoted 8 in figure 1 serves to support the shaft of a reverse idler (not illustrated) operating between the primary shaft 3 and the secondary shaft 4.

As discernible from figures 2 and 3, the hollow portion 15 of each fork 11, 12 and 13 and of the shifter element 14 presents a receiving portion 17, in the form of a projection, such as can be coupled with the motion-inducing element of an actuator. In the example illustrated, the receiving portion 17 presents a U-shaped profile and affords a socket directed away from the hollow portion 15.

To advantage, for reasons that will be made clear in due course, the four receiving portions 17 (three presented by the forks, one by the shifter element) occupy positions distanced one from another along a path extending transversely to the first rod 9 and the second rod 10. Thus, when any one of the forks 11, 12, or 13 (or the shuttle element 14) is caused to slide along the respective rod 9 or 10, the relative receiving portion 17 will not interfere with any of the other receiving portions 17.

Observing figure 2, the housing 2 will be seen to present an opening 2a through which, in the original configuration of the gearbox 1, the shift lever associated with an H-gate would have operated. The four receiving portions 17 are disposed in such a way that all face the opening 2a directly.

Advantageously, the gearbox 1 comprises a sequential selection type of actuator 19, fixed to the outside of the housing 2 and positioned over the opening 2a (figure 1). As the name suggests, an actuator of this type is designed to shift the gears sequentially, generating the movements of the forks 11, 12 and 13 and the shifter element 14 in sequence, in response to a substantially repetitive selecting action performed by the driver of the vehicle. This type of control is appreciably different to the control provided by the shift lever and H-gate of a normal road vehicle, given that the H-pattern shift is typically slow and laborious, hence unsuitable where the requirement is for high performance. By contrast, the sequential shift produces a fast response, generally to a quick succession of clicks produced by special paddles or pushbuttons mounted to the steering wheel of the vehicle.

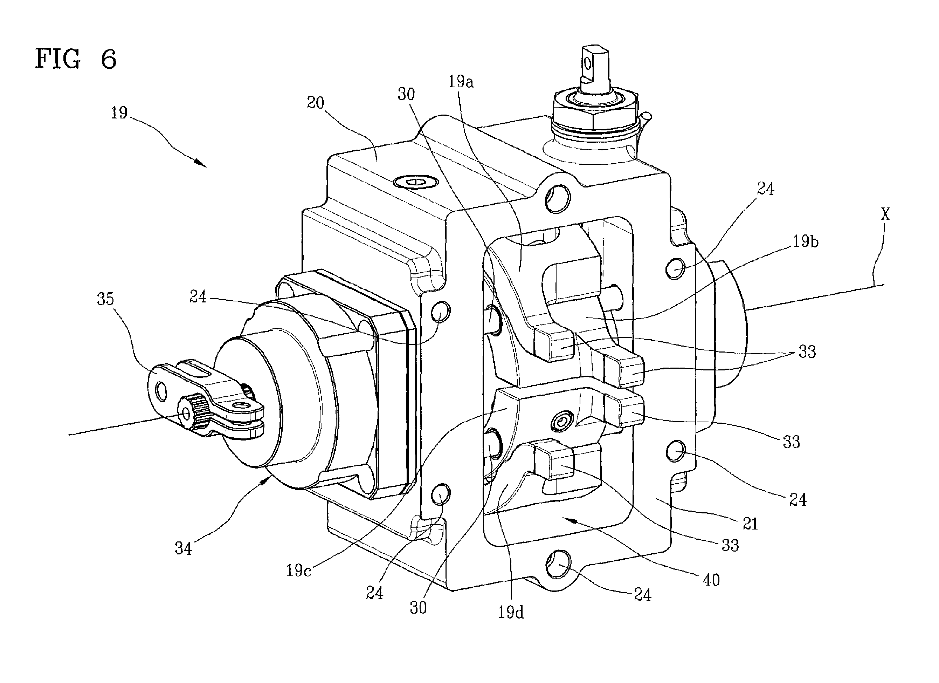

Figures 6 to 9 illustrate the technical details of the actuator 19.

The actuator 19 comprises an outer box 20 with a mounting flange 21 applicable stably to an external mounting surface 22 of the housing 2. More exactly, the external mounting surface 22 is located around the opening 2a in the housing 2. In particular, it is to this existing surface 22 that the original actuator of the gearbox will have been mounted: not a sequential type in this instance, but preferably a conventional manual shift lever and H-gate. To advantage, the mounting flange 21 will already be shaped to match the existing mounting surface 22, so that the actuator 19 can be fitted to the housing 2 directly, and without any need for machining operations to be performed on the housing 2.

Since the mounting flange 21 is shaped previously to match the original external mounting surface 22 of the housing 2, the housing requires no adaptation but can remain unaltered in terms of its geometry and general technical specifications.

In other words, the sequential actuator 19 directly replaces the previous H-pattern actuator (occupying the same position), with no permanent alteration of the housing 2 required.

In particular, the aforementioned external mounting surface 22 of the housing 2 might present a plurality of retaining bolts 23 (studs, for example) designed initially to enable the attachment of an actuator comprising an H-gate and shift lever, typical of a conventional gearbox. To advantage, the mounting flange 21 of the sequential actuator 19 will be shaped in such a way that it can be secured to the housing using these same retaining bolts 23. Accordingly, the flange 21 presents a plurality of clearance holes 24 (figures 1 and 6) through which the retaining bolts 23 are insertable when the actuator 19 is offered to the housing 2.

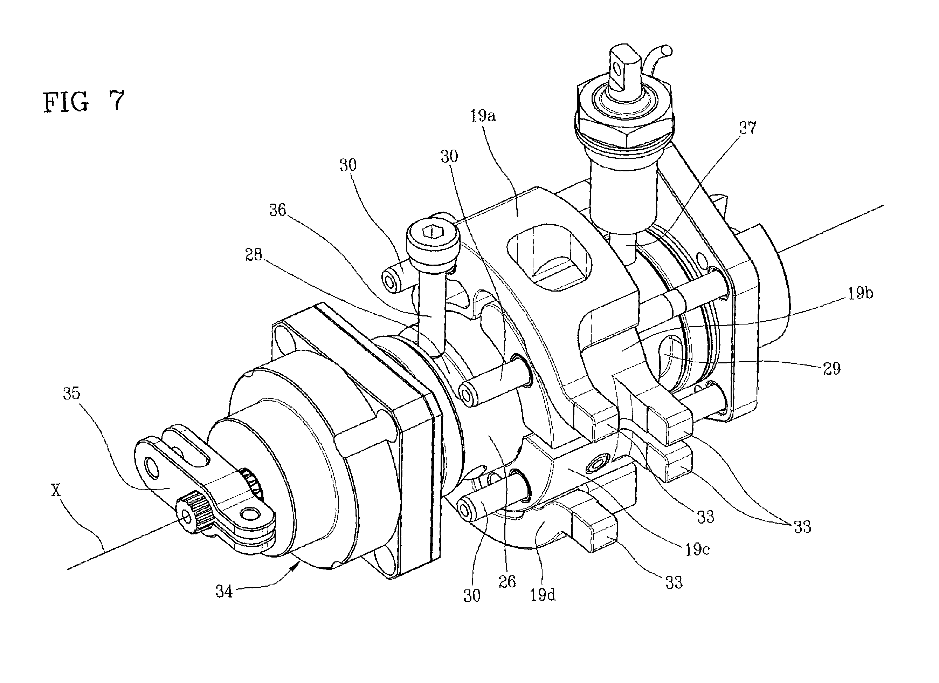

As illustrated in figure 7, the actuator 19 comprises a drum or barrel 26, by which the forks 11, 12 and 13 and the shifter element 14 are operated sequentially. The barrel 26 is mounted to the box 20 with freedom to rotate about its own longitudinal axis X.

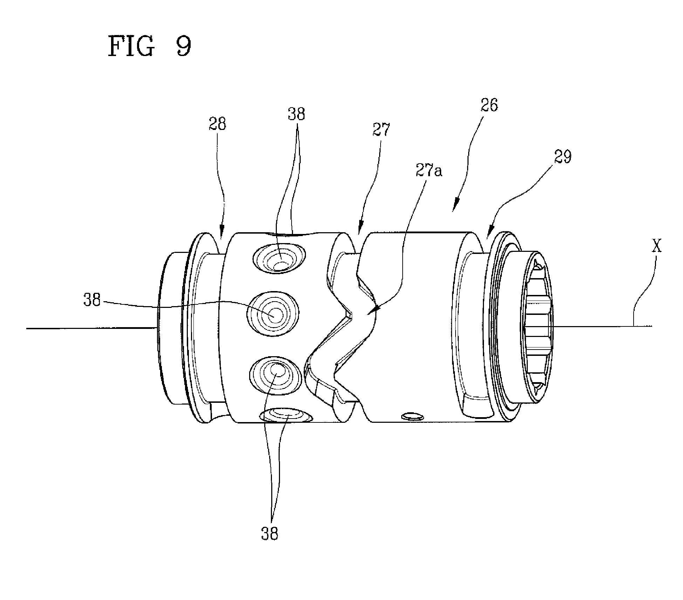

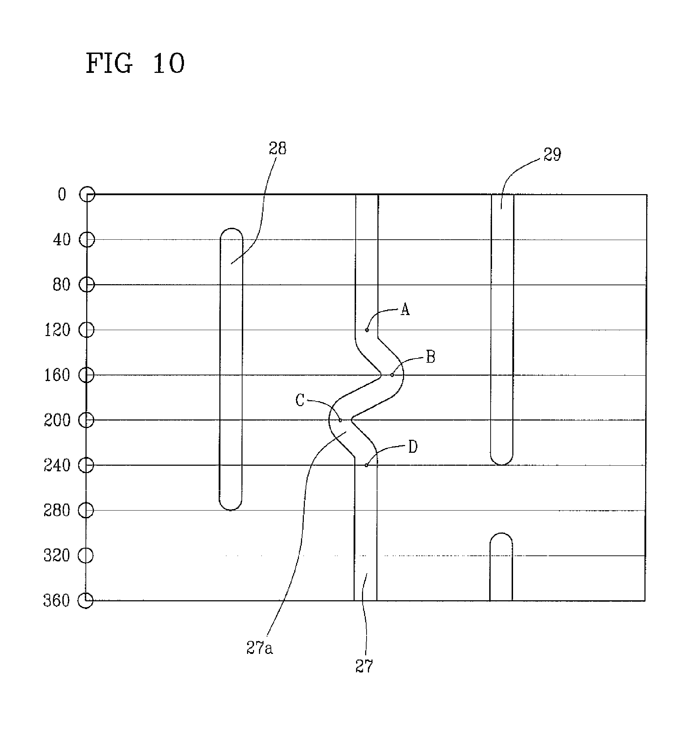

As illustrated pictorially in figure 9 and schematically in figure 10, the barrel 26 is substantially cylindrical in shape and presents a cylindrical outer surface incorporating a control groove 27. The control groove 27 extends around the entire developable circumference of the barrel 26 and is of substantially annular geometry, with the exception of a zigzag segment denoted 27a.

The barrel 26 also presents a safety groove 28, presented similarly by an outer cylindrical surface and in this case extending partially around the developable circumference of the barrel 26 (figures 7, 9 and 10).

In addition, the barrel 26 presents an auxiliary groove 29, this likewise presented by an outer cylindrical surface and extending partially around the developable circumference of the barrel 26 (figures 7, 9 and 10).

The actuator 19 further comprises four actuator elements 19a, 19b, 19c and 19d operating between the barrel 26 and the aforementioned receiving portions 17 of the forks 11, 12 and 13 and the shifter element 14, in such a way that a rotary movement of the barrel 26 can be converted into a translational movement of the forks 11, 12 and 13 and the shifter element 14.

In greater detail, each actuator element 19a, 19b, 19c and 19d is slidably supported by the box 20 of the actuator 19 and displaceable thus along a direction parallel to the rotational axis X of the barrel 26. This freedom of sliding motion is obtained by way preferably of longitudinal rails 29 associated rigidly with the box 20, on which the actuator elements 19a, 19b, 19c and 19d are carried.

Each actuator element 19a, 19b, 19c and 19d is disposed externally of the cylindrical surface presented by the barrel 26 and shaped in such a way as to breast with the selfsame cylindrical surface, for example by way of concave mating surfaces 31 presenting a profile of circular section. In addition, each actuator element 19a, 19b, 19c and 19d presents a connecting portion embodied as a projection (not illustrated) formed on the breasted surface 31 and inserted into the control groove 27.

Each actuator element 19a, 19b, 19c and 19d also presents a free end 33 configured in such a way that when the elements 19a, 19b, 19c and 19d are breasted with the barrel 26, the four ends extend away from the barrel. The free ends 33 are insertable into the corresponding receiving portions 17 of the forks 11, 12 and 13 and the shifter element 14 and able thus to induce motion in the forks 11, 12 and 13 and in the shifter element 14, causing them to translate along the axes of the rods 9 and 10. To this end, the box 20 of the actuator 19 presents an opening 40 through which the free ends 33 project to the point of engaging the respective receiving portions 17 of the forks 11, 12 and 13 and the shifter element 14.

Through the agency of the zigzag segment 27a, the control groove 27 is able to operate as a cam by which an angular movement of the barrel 26 about its axis of rotation X can be converted into a sliding movement of the actuator elements 19a, 19b, 19c and 19d and consequently into a translational movement of the forks 11, 12 and 13 and of the shifter element 14 along the axes of the respective rods 9 and 10. The connecting portions aforementioned function as follower elements interacting with the cam.

Also associated with the box 20 containing the actuator 19 is a sequential indexing device 34 coupled to the barrel 26, such as will cause the barrel to rotate through prescribed angles (preferably of 40°) when operated by the driver of the vehicle. A torque input is applied to the sequential indexing device 34 by way of a lever 35 straddling the axis of rotation X of the barrel 26 (the lever 35 will be operated electrically or hydraulically, for example, in conventional manner), in such a way that with each successive movement of the lever 35, the barrel 26 is caused to rotate through the prescribed angle, always in the same direction.

The structure of the sequential indexing device 34 is essentially familiar (from motorcycle applications, for example) and therefore will not be described in detail.

As illustrated in figure 10 (which shows the cylindrical surface of the barrel 26 developed on a flat plane), the zigzag segment 27a covers an angular distance of around 80° on the barrel 26, along which one of the aforementioned connecting portions is caused to move from a centred position (point A in figure 10) to a position laterally offset on one side (point B), then to a laterally offset position on the opposite side (point C), and finally back to the centred position (point D). The aforementioned positions correspond to a change of gear including the following sequence of steps (referred to a single fork 11, 12 or 13 controlled by the relative connecting portion):
- point A: the sliding collar 120 operated by the corresponding fork 11, 12 or 13 is not engaged with either one of the two gears 110 between which it lies;
- point B: the sliding collar 120 is engaged with one of the two gears;
- point C: the sliding collar 120 is disengaged from the gear 110 engaged previously and engaged with the gear 110 on the opposite side;
- point D: the sliding collar 120 is once again disengaged from both gears 110 and back in the neutral position.

The actuator elements are arranged in such a way that only one connecting portion can occupy the zigzag segment 27a of the control groove 27 at any one time.

Consequently, once the zigzag segment 27a has been vacated by one connecting portion, it will be occupied by another connecting portion, allowing the same movements to be induced in another sliding collar 120, and so forth.

In the case of the shifter element 14, when the connecting portion of the corresponding actuator element 19c is displaced by the zigzag segment 27a, the second rod 10 will be translated, and with it the fourth selector fork (not illustrated) by which the reverse idler (not illustrated) is caused to engage with and disengage from the primary shaft 3 or the secondary shaft 4, thereby engaging and disengaging reverse drive.

The sequential operation of the actuator 19 is thus readily apparent.

Also mounted stably to the box 20 containing the actuator 19 is a safety bolt 36 occupying the safety groove 28 and serving thus to establish a travel limiting element that will disallow further rotation of the barrel 26 following the selection of the highest forward ratio (to preclude any risk of reverse gear being engaged sequentially after top gear). Accordingly, the barrel 26 can never rotate through an angle wider than the angle covered by the safety groove 28.

In addition, the actuator 19 comprises an auxiliary bolt 37 mounted to the box 20 and engaging the auxiliary groove 29, in which it is retained normally by a spring bias. The auxiliary bolt 37 is releasable by pulling upwards, thereby allowing the barrel 26 to assume angular positions that would otherwise be inhibited, and can function as a lock and release mechanism for neutral and reverse.

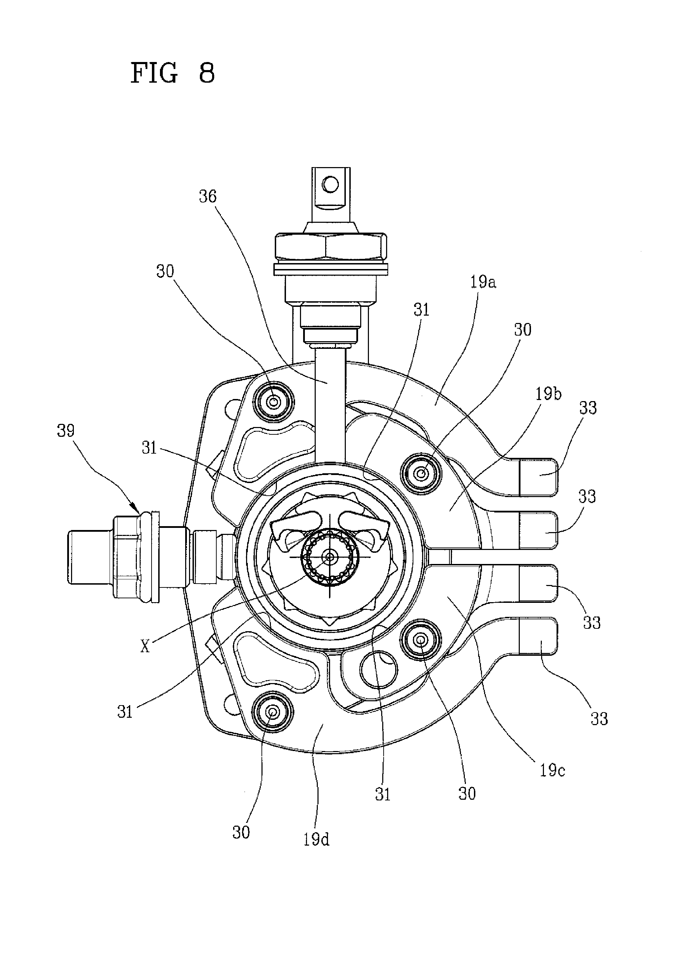

Finally, the barrel 26 may present a plurality of depressions 38 located on its outer cylindrical surface (figure 9), preferably of circular outline (and in particular, of concave geometry consisting in a part of a spherical surface), spaced apart around the axis X of the barrel 26 at an angular distance equivalent to the prescribed angular distance between two consecutive stable positions of the barrel 26. In this instance the box 20 containing the actuator 19 will carry a plunger component 39 (figure 8) having an active tip able to engage each of the depressions 38 in turn. The active tip, maintained forcibly in contact with the barrel 26 by a spring bias, helps to stabilize the angular positions assumed by the barrel 26 with additional precision. In effect, these same positions coincide with the positions in which the active tip of the plunger component 39 stably occupies one of the depressions 38 (offering resistance to further rotation of the barrel 26).

The actuator 19 thus described is fitted to the mounting surface of the housing 2 with notable ease and despatch, simply verifying that the four free ends 33 of the actuator elements 19a, 19b, 19c and 19d are located stably in the respective receiving portions 17.

The modification of a gearbox having a selection system of non-sequential type, and more particularly an H-pattern shift (for road use), to obtain a gearbox in accordance with the present invention and as described above (with sequential selection, for high performance applications), can be accomplished to advantage using a conversion kit, that is to say, a set of replacement parts required for the purpose, procurable in a single package.

A kit of this type would include, preferably:
- a replacement primary shaft and a replacement secondary shaft with spur gears (corresponding to the primary and secondary shafts 3 and 4 with spur gears described and illustrated);
- at least one selector rod, corresponding at least to the second rod 10 described above, fastened stably to the shifter element 14, or two selector rods 9 and 10 in the event that neither of the two existing rods can be reutilized;
- replacement forks 11, 12 and 13 needed for selection of the forward speed ratios, embodied in such a way as to allow operation utilizing a sequential actuator;
- a sequential actuator 19 of the type described above.

The kit thus includes components designed to replace corresponding parts of the existing gearbox internally of the housing 2, in their entirety.

To advantage, each replacement rod 9 and 10 supplied with the kit will be shaped in such a way as to match the respective existing seat 6 and 7 of the housing 2 in which it is to be installed.

In other words, each replacement rod 9 and 10 will already have been shaped to fit a respective existing seat 6 and 7 of the housing 2 occupied previously by one of the rods to which the original selector forks were mounted.

Accordingly, the seats 6 and 7 require no further machining operations for the purpose of adapting them to accommodate the replacement rods 9 and 10.

Another advantageous aspect of the invention is that different kits might be created, each intended for the conversion of a specific gearbox 1. In this situation, the mounting flange 21 of a generic kit would be shaped in such a way as to match the existing external mounting surface 22 of the gearbox in question.

To reiterate, the aforementioned existing external mounting surface 22 is that to which the original actuator of the gearbox was mounted; this however would not have been a sequential actuator but, for example, an H-pattern shift.

In entirely similar fashion, the replacement rods 9 and 10 of each generic kit will already be shaped to match the respective existing seats 6 and 7 of the gearbox 1 being converted.

A method will now be described, by which a gearbox having an H-pattern shift (for road use) is modified so as to obtain a gearbox in accordance with the present invention and as described above (with sequential selection, for high performance applications).

The existing gearbox will have been equipped originally with an actuator consisting in a shift lever and H-gate (universally familiar) attached to the aforementioned external mounting surface 22 of the housing 2.

In addition, the existing gearbox will have been equipped initially with gears presenting helically cut teeth mounted to the primary shaft and the secondary shaft.

First of all, the gearbox is removed from the vehicle.

The shift lever and H-gate actuator is then detached from the housing.

Next, the housing is opened, and the existing primary shaft, the existing secondary shaft and the three selector rod and fork assemblies are replaced respectively with the new primary shaft 3, the new secondary shaft 4 (preferably with spur gears) and the two selector rods 9 and 10 equipped with forks 11, 12 and 13 according to the present invention.

In short, the existing selection components (the existing primary shaft, the existing secondary shaft and the three selector rod and fork assemblies) designed for use in combination with an H-pattern type actuator, are replaced with selection components designed specifically for use in combination with a sequential actuator.

Once the second rod 10 has been fitted, a fourth fork (not illustrated) is mounted to the end of the rod 10 located externally of the housing 2 (see figure 1); the fourth fork operates a further sliding collar (not illustrated) mounted to the secondary shaft 4 and engaging reverse gear.

Finally, the sequential actuator 19 is fitted by offering the mounting flange 21 to the external mounting surface 22 of the housing and tightening the box 20 on the studs 23.

The method thus described is implemented without any machining operation being carried out either on the housing 2 or on other parts of the gearbox 1.

Moreover, the sequential actuator 19 occupies the position occupied previously by the original H-pattern actuator.

At this point, the gearbox 1 can be refitted to the vehicle.

Since the secondary shaft 4 is difficult to remove (in particular, requiring the removal of the gearbox from the vehicle), it can be embodied to advantage in the form of a central core 41 (constituting the shaft proper) ensheathed by three sleeves 42 in series, each carrying two gears 110 and, between the gears, one sliding collar 120 (figure 5). Each sleeve 42 presents two outer portions to which the two freely revolving gears 110 are mounted (by way of rolling bearings 43), and a central portion of larger diameter than the outer portions, to which the sliding collar 120 is mounted. The sliding collar is coupled to the central portion by way of interlocking splines and rotates as one with the sleeve 42. Adopting this solution, the gears 110 of the secondary shaft 4 can be replaced subsequently without having to remove the entire shaft 4 from the housing 2. Advantageously, furthermore, the gears 110 can be replaced at a future time without actually having to remove the gearbox 1 from the vehicle. Advantageously, in effect, the end of the housing farthest from the crown wheel 5 will be enclosed by a removable cover, so that with the cover removed, the sleeves 42 can be eased off the shaft core one by one together with the respective gears 110 and sliding collars 120.

The stated objects of the present invention are duly realized, and the drawbacks associated with the prior art successfully overcome.

Modifying a vehicle gearbox by the method according to the invention, the complexity and cost of the conversion can be considerably reduced.

With the sequential actuator fitted to the outside of the housing, in effect, the need for costly machining operations on the housing can be eliminated, and the space taken up by the actuator within the envelope of the housing significantly reduced. Accordingly, the pursuit of compactness in other parts such as the selector rods and forks, for example, becomes less important.

Moreover, the entire procedure can be completed in less time, as there is no need to send the housing to specialist workshops for machining to be done.

Also, by providing conversion kits ready for use, with replacement parts designed specifically for existing production gearboxes, the steps of the method are rendered more convenient and practical.

## Claims

1. A method of modifying a vehicle gearbox, including the steps of:
- preparing a gearbox (1) comprising a housing (2) and, installed in the housing, a primary shaft, a secondary shaft, selection means acting on the primary shaft and/or on the secondary shaft for the purpose of selecting a speed ratio between the primary and secondary shafts, and an H-pattern gear shift actuator by which the selection means are operated;
- removing the H-pattern actuator from the housing;
- substituting the primary shaft and the secondary shaft respectively with a replacement primary shaft (3) and a replacement secondary shaft (4);
- substituting the selection means with replacement selection means (9, 10, 11, 12, 13, 14) acting on the replacement primary shaft and/or on the replacement secondary shaft (3, 4) for the purpose of selecting a speed ratio between the replacement primary shaft (3) and the replacement secondary shaft (4);
- preparing an actuator (19) by which movement is induced sequentially in the replacement selection means (9, 10, 11, 12, 13, 14);
- installing the sequential actuator (19) on the housing (2);
**characterized**
**in that** the step of installing the sequential actuator (19) on the housing (2) is implemented by applying the selfsame actuator (19) to the outside of the housing (2).

2. A method as in claim 1, wherein the step of preparing the sequential actuator (19) consists in preparing a sequential actuator (19) with a mounting flange (21) such as can be applied to a corresponding external mounting surface (22) of the housing (2), coinciding preferably with an existing opening (2a) in the housing (2), the mounting flange (21) being already shaped to match the external mounting surface (22).

3. A method as in claim 2, wherein the external mounting surface (22) of the housing (2), to which the mounting flange (21) of the sequential actuator (19) is applied, coincides with a mounting surface to which an H-pattern gear shift actuator was fitted originally.

4. A method as in any one of the preceding claims, wherein the step of preparing a vehicle gearbox (1) consists in preparing an existing gearbox comprising:
- a primary shaft and a secondary shaft, at least one of which equipped with at least one pair of freely revolving gears, and with a sliding collar, interposed between the gears, by which one or other of the freely revolving gears is caused to rotate as one with the shaft on which the selfsame gears are mounted;
- existing selection means acting on the primary shaft and/or on the secondary shaft for the purpose of selecting a speed ratio between the selfsame primary and secondary shafts, the existing selection means comprising a number of rods corresponding to the number of sliding collars installed in the existing gearbox, each rod equipped with a fork engaging a respective sliding collar in such a way as to shift the sliding collar toward one or the other gear of the respective pair.

5. A method as in any one of the preceding claims, wherein there is no step that involves machining operations being performed on the housing (2).

6. A method as in any one of the preceding claims, wherein the step of preparing a gearbox (1) is implemented using a gearbox (1) of which the existing primary and secondary shafts are equipped with gears having helically cut teeth, and the step of substituting the primary shaft and the secondary shaft with a replacement primary shaft (3) and a replacement secondary shaft (4), respectively, is implemented using replacement shafts equipped with gears having straight cut teeth.

7. A kit for modifying a vehicle gearbox, and in particular for implementing a method as in one or more of the preceding claims, comprising:
- a first shaft (3) presenting a plurality of first tooth profiles (100);
- a second shaft (4) presenting a plurality of second tooth profiles (110) engageable simultaneously in meshing contact with the first tooth profiles (100) of the first shaft (3);
- at least one selector rod (9, 10);
- selection means (9, 10, 11, 12, 13, 14) acting on the first shaft (3) and/or on the second shaft (4) for the purpose of selecting a speed ratio between the first shaft (3) and the second shaft (4);
- an actuator (19) by which movement is induced in the selection means (9, 10, 11, 12, 13, 14) sequentially, presenting a mounting flange (21) applicable to a corresponding external mounting surface (22) presented by the gearbox (1) of a vehicle.

8. A kit as in claim 7, wherein the mounting flange (21) is shaped previously in such a way as to match an external mounting surface (22) of an existing gearbox (1), and preferably in such a way as to interface with an existing opening (2a) made in the housing (2) of the existing gearbox.

9. A kit as in claim 7 or 8, wherein the second tooth profiles (110) are mounted on the second shaft (4) and freely revolving, and the second shaft (4) presents a plurality of sliding collars (120) each interposed between two consecutive second tooth profiles (110) and movable toward and away from the consecutive second tooth profiles (110) in such a way that the second shaft can be made to rotate as one with either one of the consecutive second tooth profiles (110), the selection means (9, 10, 11, 12, 13, 14) comprising at least one selector rod (9, 10) and a plurality of forks (11, 12, 13) mountable slidably on the at least one selector rod (9, 10), each engageable with one of the sliding collars (120) for the purpose of moving the selfsame sliding collars (120) between the respective consecutive second tooth profiles (4).

10. A kit as in claim 9, wherein selection means (9, 10, 11, 12, 13, 14) comprise a first selector rod (9) on which at least two forks (11, 12) are mounted slidably, a second selector rod (10) on which a third fork (13) is mounted slidably, also a shifter element (14) fastenable stably to the second rod (10) and providing means by which the second rod (10) can be translated along a direction coinciding with its own lengthwise dimension, the selection means (9, 10, 11, 12, 13, 14) further comprising a fourth fork fastenable stably to the second pin (10) and serving to engage reverse gear.

11. A kit as in claim 10, wherein each fork (11, 12, 13) presents a receiving portion (17) engageable stably with the actuator (19), by way of which to receive a translational movement generated along the respective rod (9, 10).

12. A kit as in claim 10, wherein the shifter element (14) presents a respective receiving portion (17) engageable stably with the actuator (19), by way of which to receive a translational movement generated along the lengthwise dimension of the second rod (10).

13. A kit as in any one of claims 10 to 12, wherein the actuator (19) comprises:
- a box (20) presenting the mounting flange (21);
- a barrel (26) presenting at least one peripheral control groove (27) and mounted rotatably to the box (20) with freedom of angular movement about a respective axis of rotation (X),
- an actuator (19) comprises a plurality of actuator elements (19a, 19b, 19c, 19d) movable slidably along the axis of rotation (X) of the barrel (26) and engageable with the forks (11, 12, 13) in such a way as to induce movement in the forks (11, 12, 13) along the respective rods (9, 10), the actuator elements (19a, 19b, 19c, 19d) being coupled to the control groove (27), and the control groove (27) configured in such a way that an angular movement of the barrel (26) will generate a translational movement of the actuator elements (19a, 19b, 19c, 19d) along the axis of rotation (X) of the barrel (26).

14. A kit as in claim 13, wherein the actuator elements (19a, 19b, 19c, 19d) are positioned externally of the barrel (26), breasted with a peripheral surface of the selfsame barrel (26), and embodied with respective connecting portions engaging the control groove (27) of the barrel (26), each occupying a different portion of the groove (27).

15. A kit as in claim 13 or 14, wherein the control groove (27) is of substantially annular geometry and presents a zigzag segment (27a) designed to generate the translational movement of the actuator elements (19a, 19b, 19c, 19d) back and forth along the axis of rotation (X) of the barrel (26).

16. A kit as in claims 11 and 13, wherein the actuator elements (19a, 19b, 19c, 19d) present respective free ends (33) directed away from the axis of rotation (X) of the barrel (26) and engageable stably with the receiving portions (17).

17. A kit as in one or more of claims 9 to 16, wherein the at least one selector rod (9, 10) is shaped previously to match an existing seat (5, 6) fashioned in an existing gearbox, and preferably to match an existing seat (5, 6) fashioned in the housing (2) of the existing gearbox to receive a rod carrying an original selector fork.

18. A kit as in one or more of claims 7 to 17, wherein the first and second tooth profiles (100, 110) have straight cut teeth, and the first and second shafts (3, 4) are assembled preferably without synchromesh devices.

19. A gearbox obtained by implementing a method as in one or more of claims 1 to 6, comprising:
- a housing (2) delimiting an internal volume;
- a primary shaft (3) carried in rotation by the housing (2) within the envelope of the internal volume;
- a secondary shaft (4) carried in rotation by the housing (2) at least partly within the envelope, and in mesh with the primary shaft (3) by way of tooth profiles (100, 110);
- selection means (9, 10, 11, 12, 13, 14) mounted to the housing (2) internally of the envelope and acting on the primary shaft (3) and/or on the secondary shaft (4) for the purpose of selecting a speed ratio between the primary shaft (3) and the secondary shaft (4);
- an actuator (19) by which movement is induced in the selection means (9, 10, 11, 12, 13, 14) sequentially;
**characterized**
**in that** the actuator (19) is fastened to the outside of the casing (2) and acts on the selection means (9, 10, 11, 12, 13, 14) through an opening (2a) created in the housing (2).

20. A gearbox as in claim 19, wherein the secondary shaft (4) is equipped with a plurality of sliding collars (120), and selection means (9, 10, 11, 12, 13, 14) comprise two selector rods (9, 10) mounted to the housing (2), a first rod (9) slidably supporting two forks (11, 12) inducing movement in two collars (120), the second rod (10) carried slidably in the casing (2) and slidably supporting at least a third fork (13) inducing movement in a third collar (120); the second rod (10) equipped also with a shifter element (14) that can be operated by the actuator (19) in such a way as to generate a translational movement of the second selector rod (10) along a direction coinciding with its lengthwise dimension.

21. A gearbox as in claim 19 or 20, wherein the primary shaft (3), the secondary shaft (4), the actuator (19) and/or the selector rods (9, 10) form part of a kit as any one of claims 7 to 18.
